# EUROPEAN PATENT APPLICATION

(11) **EP 4 640 408 A1**
(43) Date of publication of application: **29.10.2025**
(21) Application number: 23928276.7
(22) Date of filing: 29.08.2023
(51) Int. Cl.: B29C 49/64, B29C 49/42

(54) **BOTTLE PREFORM HEATING DEVICE**

(30) Priority: 21.03.2023 CN 202310276322
(71) Applicant: Guangzhou Tech-Long Packaging Machinery Co., Ltd, Guangzhou, Guangdong 510530 (CN)
(72) Inventor: ZOU, Daqun, Guangzhou, Guangdong 510530 (CN); HE, Wenming, Guangzhou, Guangdong 510530 (CN); DENG, Zhijun, Guangzhou, Guangdong 510530 (CN)
(74) Representative: HGF
(86) International application number: PCT/CN2023/115389
(87) International publication number: WO 2024/192971

(57) **Abstract**

The present application relates to the technical field of bottle-blowing, for example, a bottle preform heating device. The bottle preform heating device includes a preform feeding module, a carrier mechanism, multiple heating mechanisms, multiple preform elevating and rotating mechanisms, and an air cooling module. The carrier mechanism includes a rack, a carrier tray and a carrier tray drive assembly, where the carrier tray is rotatably mounted on the rack, and the carrier tray drive assembly is configured to drive the carrier tray to rotate relative to the rack. The multiple heating mechanisms are disposed at intervals in a circumferential direction of the carrier tray, and each heating mechanism includes a heating barrel. The multiple preform elevating and rotating mechanisms are disposed at intervals in the circumferential direction of the carrier tray and are in one-to-one correspondence with the multiple heating mechanisms, and each of the multiple preform elevating and rotating mechanisms is configured to receive a bottle preform conveyed by the preform feeding module and insert the bottle preform into the heating barrel. The air cooling module is configured to extract air from the heating barrel to avoid local overheating of the bottle preform.

## Description

The present application claims priority to Chinese Patent Application No. 202310276322.8, filed with the China National Intellectual Property Administration (CNIPA) on Mar. 21, 2023, the disclosure of which is incorporated herein by reference in its entirety.

### TECHNICAL FIELD

The present application relates to the technical field of bottle-blowing, for example, a bottle preform heating device.

### BACKGROUND

In the packaging industry, a large number of plastic bottles are typically required for filling. The bottle-blowing process has become the main production method for plastic bottles due to its simple process and low cost. In a plastic bottle-blowing production line, it is necessary to first heat bottle preforms using a bottle preform heating oven. Then, when the bottle preforms are heated to a certain temperature, the bottle preforms are blow-molded into the plastic bottles by using a bottle-blowing machine.

In the related art, when the bottle preform heating oven heats the bottle preforms, a certain number of bottle preforms need to be placed into the bottle preform heating oven manually or by using a manipulator before the bottle preform heating oven can start to work. After the heating is completed, the bottle preforms are transferred to the bottle-blowing machine by using the manipulator for bottle-blowing. As a result, the operation process is not compact enough, the equipment utilization rate is low, and the production efficiency cannot satisfy the requirements of high-yield production.

Therefore, there is an urgent need for a bottle preform heating device to solve the above-described problems.

### SUMMARY

The present application provides a bottle preform heating device that improves the operation process, enhances the equipment utilization rate, and increases the production efficiency.

A bottle preform heating device includes a preform feeding module, a carrier mechanism, multiple heating mechanisms, multiple preform elevating and rotating mechanisms, and an air cooling module. The carrier mechanism includes a rack, a carrier tray and a carrier tray drive assembly, where the carrier tray is rotatably mounted on the rack, and the carrier tray drive assembly is configured to drive the carrier tray to rotate relative to the rack. The multiple heating mechanisms are disposed at intervals in a circumferential direction of the carrier tray, and each heating mechanism includes a heating barrel. The multiple preform elevating and rotating mechanisms are disposed at intervals in the circumferential direction of the carrier tray and are in one-to-one correspondence with the multiple heating mechanisms, and each of the multiple preform elevating and rotating mechanisms is configured to receive a bottle preform conveyed by the preform feeding module and insert the bottle preform into the heating barrel. The air cooling module is configured to extract air from the heating barrel.

### BRIEF DESCRIPTION OF DRAWINGS

FIG. 1 is a schematic structural view of a preform with a handle according to an embodiment of the present application;
FIG. 2 is a schematic structural view of a bottle preform heating device according to an embodiment of the present application;
FIG. 3 is a schematic structural view of a preform feeding module according to an embodiment of the present application;
FIG. 4 is a schematic structural view of a carrier mechanism according to an embodiment of the present application;
FIG. 5 is a schematic structural view of a preform elevating and rotating mechanism mounted on a carrier tray according to an embodiment of the present application;
FIG. 6 is a partial schematic view of a preform elevating and rotating mechanism mounted on a carrier tray according to an embodiment of the present application;
FIG. 7 is a partial sectional view of a preform elevating and rotating mechanism according to an embodiment of the present application;
FIG. 8 is a schematic structural view of a guide rail according to an embodiment of the present application;
FIG. 9 is a partial schematic view of a guide rail according to an embodiment of the present application;
FIG. 10 is a schematic structural view of a heating mechanism and an air cooling mechanism according to an embodiment of the present application; and
FIG. 11 is a schematic structural view of an air extraction box according to an embodiment of the present application.

### List of reference numbers

- 100: preform with a handle
- 101: preform body
- 102: handle
- 1: preform feeding module
- 11: preform feeding mechanism
- 12: transition mechanism
- 13: orientation mechanism
- 2: carrier mechanism
- 21: rack
- 22: carrier tray
- 221: upper tray body
- 222: connector
- 223: lower tray body
- 23: carrier tray drive assembly
- 3: heating mechanism
- 31: heating barrel
- 32: mounting base
- 4: preform elevating and rotating mechanism
- 41: bracket
- 42: preform insertion assembly
- 421: elevating base
- 422: preform insertion member
- 4221: elevating and rotating shaft
- 4222: preform insertion head
- 423: follower wheel
- 43: elevating drive assembly
- 431: guide rail
- 4311: body portion
- 43111: first horizontal section
- 43112: barrel detachment section
- 43113: second horizontal section
- 43114: third horizontal section
- 43115: fourth horizontal section
- 43116: barrel entry section
- 43117: fifth horizontal section
- 4312: first adjustment portion
- 43121: preform detachment section
- 4313: second adjustment portion
- 43131: preform entry section
- 432: reset member
- 44: guide assembly
- 441: slide rail
- 442: slide block
- 45: rotation drive assembly
- 451: rotation driver
- 452: input gear
- 453: output gear
- 454: slide sleeve
- 5: air cooling module
- 51: main exhaust pipe
- 52: air cooling mechanism
- 521: fan
- 522: exhaust duct
- 523: air extraction box
- 5231: connection portion
- 5232: air box portion
- 52321: duct
- 5233: air guide plate
- 524: bellow
- 6: preform picking manipulator

### DETAILED DESCRIPTION

In the description of the present application, unless expressly specified or limited otherwise, the terms "coupled", "connected", and "fixed" are to be construed broadly, for example, may mean fixedly connected, detachably connected, or integrated; may mean mechanically connected or electrically connected; may mean directly connected, indirectly connected through an intermediate medium, or may mean inside connection of two elements or the interaction between two elements. The specific meanings of the above terms in the present application may be understood according to the specific circumstances by those of ordinary skill in the art.

In the present application, unless expressly specified or limited otherwise, a first feature being "on" or "under" a second feature may include the first feature and the second feature being in direct contact, or may include the first feature and the second feature not being in direct contact but being in contact with each other through additional features between the first feature and the second feature. Moreover, the first feature being "on", "above" and "over" the second feature includes the first feature being directly above and obliquely above the second feature, or simply represents that the first feature is at a higher level than the second feature. The first feature being "under", "below" and "beneath" the second feature includes the first feature being directly below and obliquely below the second feature, or simply represents that the first feature is at a lower level than the second feature.

In the description of the present application, orientations or positional relationships of the terms "upper", "lower", "left", "right", and the like are based on the orientations or positional relationships shown in the drawings, and are merely for convenience of description and simplification of operations, and do not indicate or imply that the devices or elements referred to must have a particular orientation, be constructed and operated in a particular orientation, and thus should not be construed as limiting the present application. Furthermore, the terms "first" and "second" are used merely to distinguish between descriptions and have no special meaning.

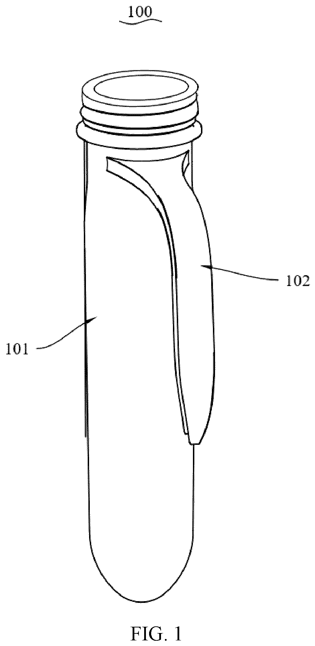

FIG. 1 shows a schematic structural view of a preform 100 with a handle provided in this embodiment. As shown in FIG. 1, the preform 100 with a handle includes a preform body 101 and a handle 102 disposed at the upper end of the preform body 101. After heating and blow-molding, the preform body 101 is blow-molded into the bottle body of a plastic bottle, while the handle 102 remains unchanged.

This embodiment provides a bottle preform heating device. The bottle preform heating device may be used for heating the preform 100 with a handle or a handleless bottle preform. The bottle preform heating device enables automatic preform feeding, inserting preforms into heating barrels, automatic heating, and automatic preform detachment. As a result, it has the advantages of the compact operation process, high equipment utilization rate, and high production efficiency.

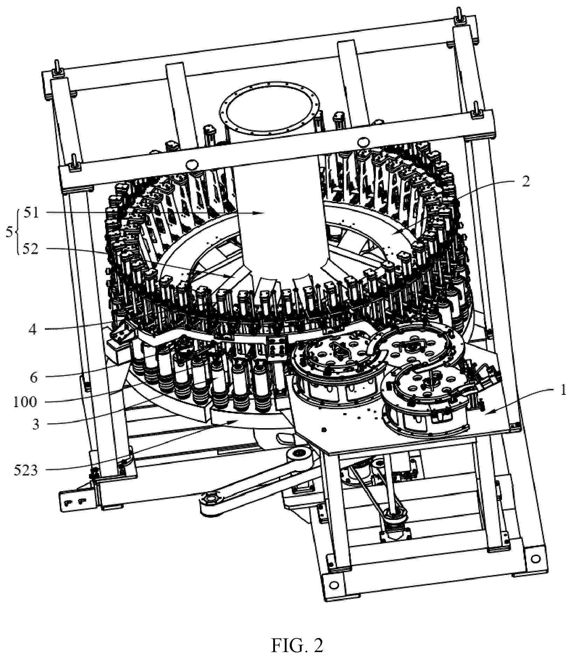

FIG. 2 shows a schematic structural view of a bottle preform heating device provided in this embodiment. As shown in FIG. 2, the bottle preform heating device includes a preform feeding module 1, a carrier mechanism 2, a heating mechanism 3, a preform elevating and rotating mechanism 4, an air cooling module 5, and a preform picking manipulator 6. The preform feeding module 1 is configured to automatically convey the preform 100 with a handle. The carrier mechanism 2 serves as a mounting structure for the heating mechanism 3 and the preform elevating and rotating mechanism 4 and is configured to drive the heating mechanism 3 and the preform elevating and rotating mechanism 4 to rotate synchronously. The preform elevating and rotating mechanism 4 is configured to receive the preform 100 with a handle conveyed by the preform feeding module 1 and transfer the preform 100 with a handle to the heating mechanism 3 for heating. The heating mechanism 3 is configured to heat the preform 100 with a handle. The air cooling module 5 is configured to extract air from the heating mechanism 3 to prevent local overheating of the preform 100 with a handle during heating. The preform picking manipulator 6 is configured to pick out the preform 100 with a handle heated to a certain temperature and transfer the heated preform 100 with a handle to a bottle-blowing machine for blow-molding operations.

With continued reference to FIG. 2, multiple heating mechanisms 3 are disposed at intervals in a circumferential direction of the carrier mechanism 2, and each of the multiple heating mechanisms 3 includes a heating barrel 31. Multiple preform elevating and rotating mechanisms 4 are disposed at intervals in the circumferential direction of the carrier mechanism 2 and are in one-to-one correspondence with the multiple heating mechanisms 3. Each of the multiple preform elevating and rotating mechanisms 4 is configured to receive the preform 100 with a handle conveyed by the preform feeding module 1 and insert the preform body 101 into the heating barrel 31, where the handle 102 is located outside the heating barrel 31.

With continued reference to FIG. 2, the air cooling module 5 includes a main exhaust pipe 51 and multiple air cooling mechanisms 52. The main exhaust pipe 51 is disposed in the middle of the carrier mechanism 2. The multiple air cooling mechanisms 52 are disposed at intervals in the circumferential direction of the carrier mechanism 2, and air outlets of the multiple air cooling mechanisms 52 communicate with the main exhaust pipe 51. One air cooling mechanism 52 may extract air from multiple heating barrels 31, to avoid the local overheating of the preform 100 with a handle. Moreover, the number of air cooling mechanisms 52 is reduced to lower the cost of the equipment. Exemplarily, an extension direction of the main exhaust pipe 51 is disposed to be perpendicular to the carrier mechanism 2, that is, a central line of the main exhaust pipe 51 coincides with a rotation axis of the carrier mechanism 2. The air cooling mechanism 52 is connected to the bottom of the heating barrel 31 for air extraction, so that hot air in the heating barrel 31 is extracted from the bottom of the heating barrel 31 to prevent the hot air from heating a preform opening of the heating barrel 31 and avoid deformation of the preform opening due to heat. Compared with air extraction from the top of the heating box in the related art, air extraction from the bottom provides the better air cooling effect, prevents thermal deformation of the preform opening, and improves the yield rate.

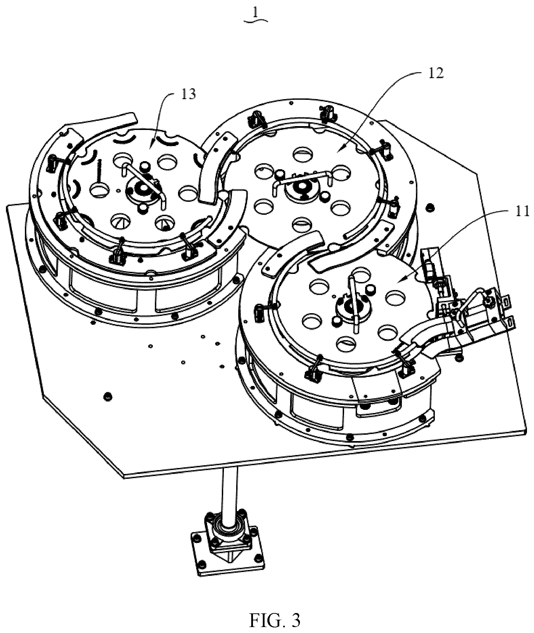

FIG. 3 shows a schematic structural view of the preform feeding module 1 provided in this embodiment. As shown in FIG. 3 in conjunction with FIG. 2, the preform feeding module 1 includes a preform feeding mechanism 11, a transition mechanism 12 and an orientation mechanism 13. The preform feeding mechanism 11 is configured to receive a preform 100 with a handle on a conveyor line and convey the preform 100 with a handle to the transition mechanism 12. The transition mechanism 12 is configured to convey the preform 100 with a handle to the orientation mechanism 13. The orientation mechanism 13 is configured to adjust a direction of the handle 102 of the preform 100 with a handle and convey the preform 100 with a handle to the preform elevating and rotating mechanism 4.

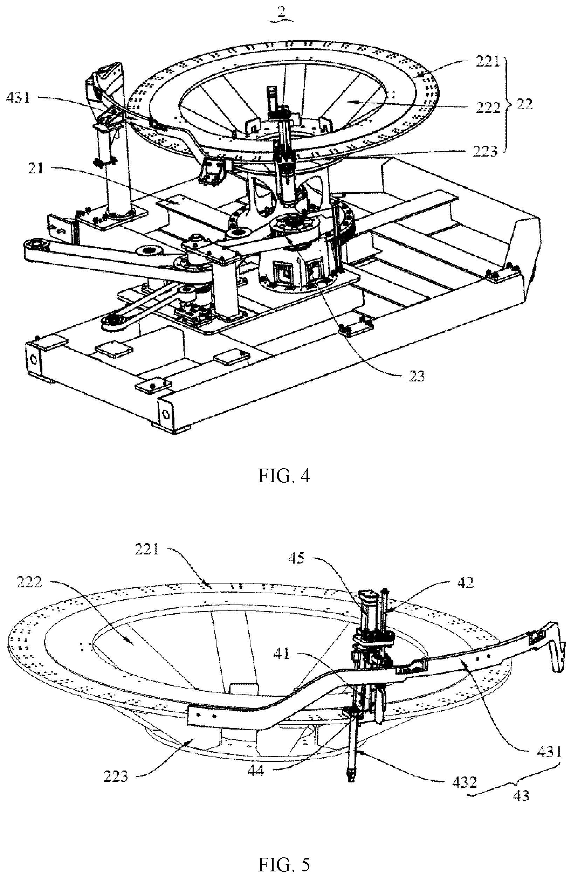

FIG. 4 shows a schematic structural view of the carrier mechanism 2 provided in this embodiment. As shown in FIG. 4, the carrier mechanism 2 includes a rack 21, a carrier tray 22 and a carrier tray drive assembly 23. The carrier tray 22 is rotatably mounted on the rack 21, and the carrier tray drive assembly 23 is configured to drive the carrier tray 22 to rotate relative to the rack 21. The carrier tray 22 includes an upper tray body 221, a connector 222 and a lower tray body 223. A diameter of the upper tray body 221 is greater than a diameter of the lower tray body 223, and multiple connectors 222 are connected between the upper tray body 221 and the lower tray body 223.

Exemplarily, the main exhaust pipe 51 of the air cooling module 5 is disposed in a middle position of the lower tray body 223 of the carrier tray 22, and the central line of the main exhaust pipe 51 of the air cooling module 5 coincides with a central line of the lower tray body 223.

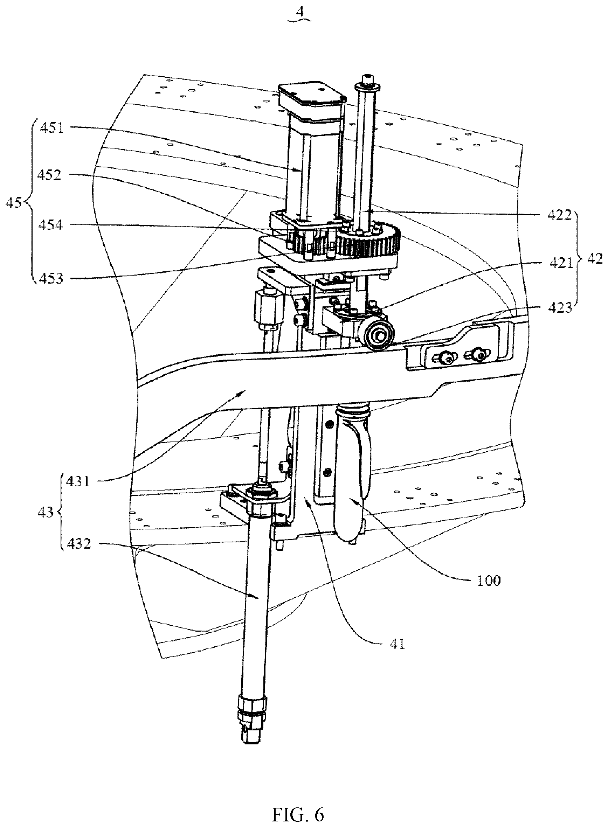

FIG. 5 shows a schematic structural view of a preform elevating and rotating mechanism 4 mounted on a carrier tray 22 provided in this embodiment. FIG. 6 shows a partial schematic view of a preform elevating and rotating mechanism 4 mounted on a carrier tray 22 provided in this embodiment. As shown in FIGS. 5 and 6, the preform elevating and rotating mechanism 4 includes a bracket 41, a preform insertion assembly 42 and an elevating drive assembly 43. The bracket 41 is fixed on the carrier tray 22. The preform insertion assembly 42 includes an elevating base 421 and a preform insertion member 422. The elevating base 421 is slidably mounted on the bracket 41, and the preform insertion member 422 is mounted on the elevating base 421 and is located above the heating barrel 31. The elevating drive assembly 43 is configured to drive the elevating base 421 to move up and down relative to the bracket 41, to enable the preform insertion member 422 to insert into the preform 100 with a handle on the preform feeding module 1 and enable the preform body 101 of the preform 100 with a handle to insert into the heating barrel 31. Exemplarily, the bracket 41 is fixed on the upper tray body 221 of the carrier tray 22.

The preform elevating and rotating mechanism 4 further includes a guide assembly 44. The guide assembly 44 includes a slide rail 441 and a slide block 442 which are slidingly fit. The slide rail 441 is fixed on the bracket 41 in a vertical direction. The slide block 442 is configured to mount the elevating base 421. The guide assembly 44 is provided, so that the elevating base 421 can be ensured to be stably moved up and down along the slide rail 441.

The elevating drive assembly 43 includes a guide rail 431 and a reset member 432. The guide rail 431 includes a lifting section and a lowering section. The elevating base 421 may move up along with the lifting section of the guide rail 431, and the elevating base 421 may move down along the lowering section of the guide rail 431 at the lowering section of the guide rail 431 under the action of the reset member 432. The moving up and down of the elevating base 421 may drive the preform insertion member 422 to move up and down. In the process of moving down the preform insertion member 422, the preform insertion member 422 is inserted into the preform 100 with a handle and the preform 100 with a handle is inserted into the heating barrel 31. In the process of moving up the preform insertion member 422, the preform insertion member 422 drives the preform 100 with a handle to disengage from the heating barrel 31, and the preform insertion member 422 is disengaged from the preform 100 with a handle.

Optionally, the reset member 432 is a linear driver, the reset member 432 is mounted on the bracket 41, and an output end of the reset member 432 is connected to the elevating base 421. Exemplarily, the reset member 432 may be a linear cylinder, a linear hydraulic cylinder, a linear motor, and the like. Optionally, when the reset member 432 is the linear driver, the output end of the reset member 432 is hinged to the elevating base 421 through a floating connection, a hinge connection, or a ball hinge connection. Of course, in other embodiments, the reset member 432 may also be a high-strength reset spring, and the spring is in a stretched state when the elevating base 421 moves up, so that when the elevating base 421 moves to the lowering section of the guide rail 431, the spring may pull down the elevating base 421.

In order to prevent the preform insertion member 422 from moving downward infinitely under the driving of the reset member 432, a limit plate is mounted at the upper end of the preform insertion member 422 to limit the lowering position of the preform insertion member 422.

Optionally, the preform insertion assembly 42 further includes a follower wheel 423. The follower wheel 423 is rotatably mounted on the elevating base 421. A wheel surface of the follower wheel 423 may abut against the elevating drive assembly, to ensure that the elevating base 421 may stably move up and down along the guide rail 431 while reducing the friction force between the elevating base 421 and the guide rail 431.

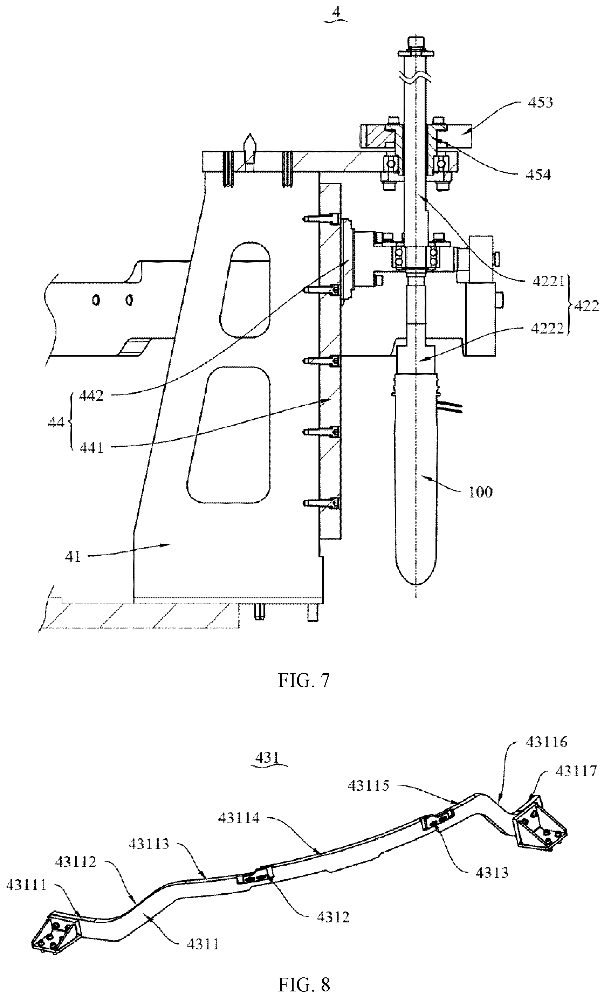

FIG. 7 shows a partial sectional view of a preform elevating and rotating mechanism 4 provided in the present application. As shown in FIG. 7 in conjunction with FIG. 6, the preform elevating and rotating mechanism 4 further includes a rotation drive assembly 45. The preform insertion member 422 is rotatably mounted on the elevating base 421, and the rotation drive assembly 45 is configured to drive the preform insertion member 422 to rotate, thereby ensuring that the preform 100 with a handle is heated uniformly during the heating process and avoiding local overheating.

The preform insertion member 422 includes a preform insertion head 4222 and an elevating and rotating shaft 4221 which are connected to each other. The elevating and rotating shaft 4221 is rotatably fitted with the elevating base 421 through a bearing. Exemplarily, the preform insertion head 4222 is connected to the elevating and rotating shaft 4221 through a snap-fit groove or a keyway, to enable synchronous rotation of the preform insertion head 4222 and the elevating and rotating shaft 4221. The preform insertion head 4222 may be selected from a conventional preform insertion head in the related art. For example, the preform insertion head includes a first member and a second member. The second member is sleeved on the first member. An O-shaped rubber ring is disposed between the second member and the first member. The second member is configured to be inserted into a bottle mouth of the bottle blank. The second member is an expansion member, thereby enabling the second member to be smoothly inserted into and tightly expanded in the bottle mouth of the bottle preform by means of elastic deformation of the O-shaped rubber ring. The details are not listed here.

Optionally, the rotation drive assembly 45 includes a rotation driver 451, an input gear 452, an output gear 453 and a slide sleeve 454. The rotation driver 451 is mounted on the bracket 41 and is configured to drive the input gear 452 to rotate. The output gear 453 meshes with the input gear 452, and the slide sleeve 454 is drivingly connected to the output gear 453. The elevating and rotating shaft 4221 of the preform insertion member 422 is configured to slidably pass through the slide sleeve 454 and can rotate along with rotation of the slide sleeve 454 and can move up and down relative to the slide sleeve 454. It is to be noted that, the slide sleeve 454 may be drivingly connected to the output gear 453, that is, the slide sleeve 454 is fixed in the output gear 453, or the slide sleeve 454 is fit with the output gear 453 through a keyway, as long as it is ensured that the slide sleeve 454 rotates with the output gear 453.

Exemplarily, the elevating and rotating shaft 4221 is fitted with the slide sleeve 454 by means of a straight keyway or a planar transmission. When the elevating base 421 drives the preform insertion member 422 to move up and down, the preform insertion member 422 can move up and down relative to the slide sleeve 454 and the output gear 453, to perform entry, barrel entry, barrel detachment, and preform detachment of the preform insertion head 4222 of the preform insertion member 422. When the output gear 453 drives the slide sleeve 454 to rotate, the elevating and rotating shaft 4221 may also drive the preform insertion head 4222 to rotate, so that the preform 100 with a handle rotates along with the preform insertion head 4222, and thus the preform 100 with a handle is heated uniformly. In addition, the elevating and rotating shaft 4221 and the preform insertion head 4222 are coaxially disposed, and the elevating movement and the rotating movement are concentrated on the same axis, so that the structure is compact. Moreover, the elevating action and the rotating action are independent of each other and do not interfere with each other.

Exemplarily, the rotation driver 451 may select a motor with an encoder. By means of the programmatic control, the rotation driver 451 drives the elevating and rotating shaft 4221 to bring the preform insertion head 4222 to rotate forward and reverse or rotate at a variable speed in the heating barrel 31, thereby ensuring that the preform 100 with a handle is heated uniformly. By means of the encoder, it can adapt to different requirements for preform transferring. In addition, in the process of heating the preform 100 with a handle in the heating barrel 31, the preform elevating and rotating mechanism 4 may accurately position the direction of the handle 102 of the preform 100 with a handle to avoid the heating of the handle 102. Each heating barrel 31 is connected to the air cooling mechanism 52, and the air cooling mechanism 52 is configured to extract air from the heating barrel 31 to avoid the local overheating of the preform 100 with a handle.

With continued reference to FIG. 7, the elevating and rotating shaft 4221 is rotationally connected to the elevating base 421 through a bearing. A snap ring is disposed on the elevating and rotating shaft 4221. The elevating and rotating shaft 4221 is fixedly connected to the bearing through the snap ring, so that the elevating and rotating shaft 4221 is driven to move up and down synchronously when the elevating base 421 moves up and down.

FIG. 8 shows a schematic structural view of a guide rail 431 provided in this embodiment. As shown in FIG. 8, the guide rail 431 includes a barrel detachment section 43112, a preform detachment section 43121, a preform entry section 43131, and a barrel entry section 43116 that are disposed at intervals in a rotation direction of the carrier tray 22 in sequence. Each of the barrel detachment section 43112 and the preform detachment section 43121 is an arc-shaped section extending up in the rotation direction of the carrier tray 22, and each of the preform entry section 43131 and the barrel entry section 43116 is an arc-shaped section extending down in the rotation direction of the carrier tray 22. The elevating base 421 is capable of moving up and down along the guide rail 431. Since the elevating base 421 is in sliding fit with the slide rail 441 on the bracket 41 through the slide block 442, when the carrier tray 22 rotates, the elevating base 421 may move up along the slide rail 441 under the action of the barrel detachment section 43112 and the preform detachment section 43121 of the guide rail 431. When the carrier tray 22 continues to rotate, the elevating base 421 may be driven by the reset member 432 to move down along the preform entry section 43131 and the barrel entry section 43116 of the guide rail 431.

An elevating node for the elevating motion of the preform insertion member 422 of the preform elevating and rotating mechanism 4 needs to be precisely positioned and fitted with the preform 100 with a handle conveyed by the preform feeding module 1 and a clamping end of the preform picking manipulator 6, to accurately insert the preform 100 with a handle and transfer the preform 100 with a handle into the heating barrel 31 or disengage from the preform 100 with a handle, so that the preform 100 with a handle may be taken away by the preform picking manipulator 6. Exemplarily, the rotation direction of the carrier tray 22 is used as a reference, the starting end of the preform detachment section 43121 of the guide rail 431 is aligned with the clamping end of the preform picking manipulator 6, the clamping end of the preform picking manipulator 6 firstly clamps the preform 100 with a handle, then when the elevating base 421 moves up along with the preform detachment section 43121, the preform insertion head 4222 is disengaged from the preform 100 with a handle, and the preform picking manipulator 6 transfers the preform 100 with a handle to the bottle-blowing machine. The end of the preform entry section 43131 of the guide rail 431 is aligned with the preform 100 with a handle conveyed by the preform feeding module 1, when the elevating base 421 moves down along the preform entry section 43131, the preform insertion head 4222 on the elevating base 421 may just be inserted into the preform 100 with a handle conveyed by the preform feeding module 1, thereby completing the reception of the preform 100 with a handle by the preform insertion head 4222.

After the entire bottle preform heating device is assembled, due to installation errors or machining tolerances of components, the misalignments between the guide rail 431 and the preform feeding module 1 and between the guide rail 431 and the preform picking manipulator 6 are prone to occur. In this case, adjusting either the overall position of the guide rail 431 or the positions of the preform feeding module 1 and the preform picking manipulator 6 is inconvenient to operate. Moreover, the accurate alignment is often difficult to achieve in one attempt, and thus multiple adjustments and repeated alignment are required. This not only increases the labor intensity of workers but also reduces operational efficiency.

In order to solve the above-described problems, the preform detachment section 43121 of the guide rail 431 and the preform entry section 43131 of the guide rail 431 are designed to be adjustable in position, and a position of the preform detachment section 43121 and a position of the preform entry section 43131 are adjusted separately, so that the alignment of the preform detachment section 43121 and the preform picking manipulator 6 and the alignment of the blank insertion section 43131 and the blank feeding module 1 are achieved, which not only facilitates adjustment, but also has high adjustment efficiency and facilitates multiple repeated adjustments.

Optionally, the guide rail 431 includes a body portion 4311, two ends of the body portion 4311 are fixed to the rack 21, and the barrel detachment section 43112 and the barrel entry section 43116 are disposed on the body portion 4311. The guide rail 431 further includes a first adjustment portion 4312, the preform detachment section 43121 is disposed on the first adjustment portion 4312, and the position at which the first adjustment portion 4312 is mounted on the body portion 4311 is adjustable. The guide rail 431 further includes a second adjustment portion 4313, the preform entry section 43131 is disposed on the second adjustment portion 4313, and the position at which the second adjustment portion 4313 is mounted on the body portion 4311 is adjustable. In this embodiment, the guide rail 431 includes the body portion 4311, the first adjustment portion 4312 and the second adjustment portion 4313. The first adjustment portion 4312 is provided with the preform detachment section 43121, and the position at which the first adjustment portion 4312 is mounted on the body portion 4311 is adjustable in the rotation direction of the carrier tray 22, to adjust the distance between the preform detachment section 43121 and the barrel detachment section 43112 in the rotation direction of the carrier tray 22. The second adjustment portion 4313 is provided with the preform entry section 43131, and the position at which the second adjustment portion 4313 is mounted on the body portion 4311 is adjustable in the rotation direction of the carrier tray 22 to adjust the distance between the preform entry section 43131 and the barrel entry section 43116 in the rotation direction of the carrier tray 22.

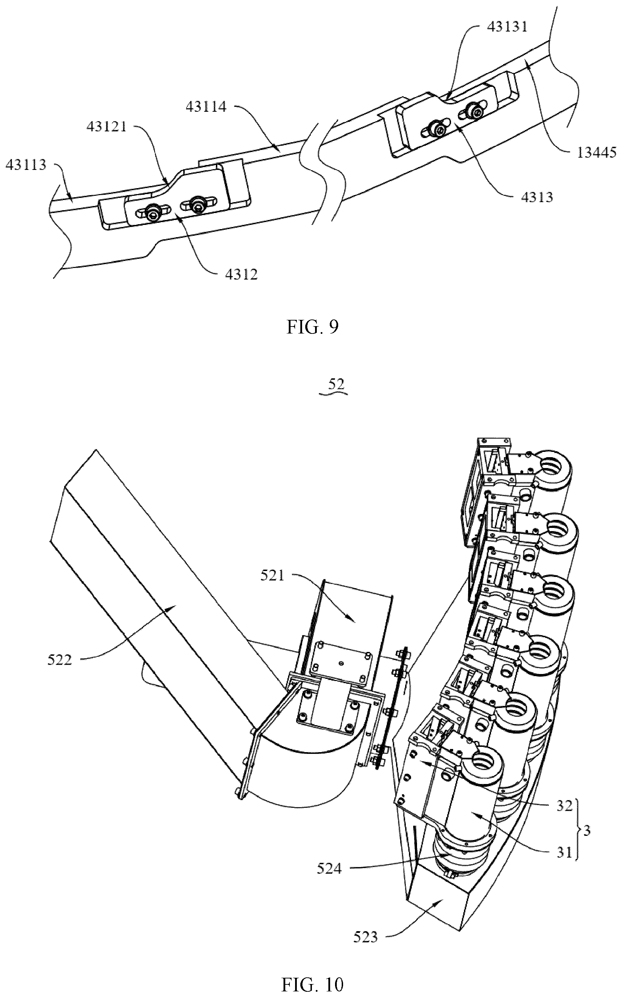

FIG. 9 shows a partial schematic view of the guide rail 431 provided in this embodiment. As shown in FIG. 9 in conjunction with FIG. 8, the body portion 4311 includes a first horizontal section 43111, a barrel detachment section 43112, a second horizontal section 43113, a third horizontal section 43114, a fourth horizontal section 43115, a barrel entry section 43116, and a fifth horizontal section 43117 disposed in sequence. The first horizontal section 43111 and the fifth horizontal section 43117 are both fixed to the rack 21. The second horizontal section 43113 is in stepped connection with the third horizontal section 43114, and a first adjustment groove is disposed in a connection region of the second horizontal section 43113 and the third horizontal section 43114, a length of the first adjustment groove is greater than a length of the first adjustment portion 4312, and the first adjustment portion 4312 is fixed within the first adjustment groove in a position-adjustable manner in the length direction of the first adjustment groove. Exemplarily, the first adjustment portion 4312 is provided with a long waist hole extending in the rotation direction of the carrier tray 22, and the first adjustment groove is provided with a through hole, to achieve the position adjustment of the first adjustment portion 4312 in the first adjustment groove. Similarly, the third horizontal section 43114 is in stepped connection with the fourth horizontal section 43115, and a second adjustment groove is disposed in a connection region of the third horizontal section 43114 and the fourth horizontal section 43115, a length of the second adjustment groove is greater than a length of the second adjustment portion 4313, and the second adjustment portion 4313 is fixed within the second adjustment groove in a position-adjustable manner in the length direction of the second adjustment groove. Exemplarily, the second adjustment portion 4313 is provided with a long waist hole extending in the rotation direction of the carrier tray 22, and the second adjustment groove is provided with a through hole, to achieve the position adjustment of the second adjustment portion 4313 in the second adjustment groove. Optionally, the number of long waist holes on the first adjustment portion 4312 is two, and correspondingly, the number of through holes is also two; the number of long waist holes on the second adjustment portion 4313 is two, and correspondingly, the number of through holes is also two.

Exemplarily, a height difference between the second horizontal section 43113 and the first horizontal section 43111 is greater than a height difference between the third horizontal section 43114 and the second horizontal section 43113, that is, a height span of the barrel detachment section 43112 is greater than a height span of the preform detachment section 43121. A height difference between the fifth horizontal section 43117 and the fourth horizontal section 43115 is greater than a height difference between the fourth horizontal section 43115 and the third horizontal section 43114, that is, a height span of the barrel entry section 43116 is greater than a height span of the preform entry section 43131.

FIG. 10 shows a schematic structural view of the heating mechanism 3 and the air cooling mechanism 52 provided in this embodiment. As shown in FIG. 10, the heating mechanism 3 further includes a mounting base 32, the mounting base 32 is fixed to the bracket 41, the heating barrel 31 is mounted to the mounting base 32, and the heating barrel 31 and the preform insertion member 422 are coaxially disposed. In other embodiments, the heating mechanism 3 may be directly mounted on the carrier tray 22, as long as it is ensured that the preform insertion member 422 of the preform elevating and rotating mechanism 4 may insert the preform 100 with a handle into the heating barrel 31 of the heating mechanism 3.

Optionally, the heating barrel 31 includes a heating housing and a heating lamp. The heating lamp is partially accommodated in the heating housing, and multiple heating lamps are disposed at intervals in a length direction of the heating housing. The preform body 101 of the hand preform 100 is inserted into the heating housing and is located in the middle of the heating lamps, and the preform body 101 of the hand preform 100 is heated by the heating lamps.

The heating housing is a vertically-through housing structure. Under the action of the preform insertion member 422, the preform 100 with a handle is inserted into the heating housing from an upper end of the heating housing. The air cooling module 5 is connected below the heating housing and sucks the air inside the heating housing from below the heating housing, thereby preventing the local temperature inside the heating housing from being too high.

With continued reference to FIG. 10, the air cooling mechanism 52 includes a fan 521, an exhaust duct 522, and an air extraction box 523. A first end of the exhaust duct 522 is connected to an air outlet of the fan 521, and a second end of the exhaust duct 522 is connected to the main exhaust pipe 51. The air extraction box 523 is connected to an air inlet of the fan 521, the air extraction box 523 is provided with multiple ducts 52321, and the heating barrel 31 is mounted on the duct 52321 and communicates with the duct 52321. In FIG. 10, one air cooling mechanism 52 includes six ducts 52321, and each duct 52321 is connected to one heating barrel 31. Of course, in other embodiments, any number of ducts 52321 may be disposed on the air extraction box 523 of one air cooling mechanism 52, for example, the number of ducts 52321 may be set according to the size of the air extraction box 523 and the power of the fan 521, which is not limited herein. With such an arrangement, it is possible to both reduce the number of fans 521 and lower the cost of the equipment, and facilitate the manufacturing, mounting, and positioning of the air cooling mechanism 52.

Exemplarily, each of the heating barrels 31 is connected to a respective one of the ducts 52321 through a bellow 524. The bellow 524 is provided to connect the heating barrel with the duct 52321, so that machining or installation errors can be compensated and the mounting operation is facilitated.

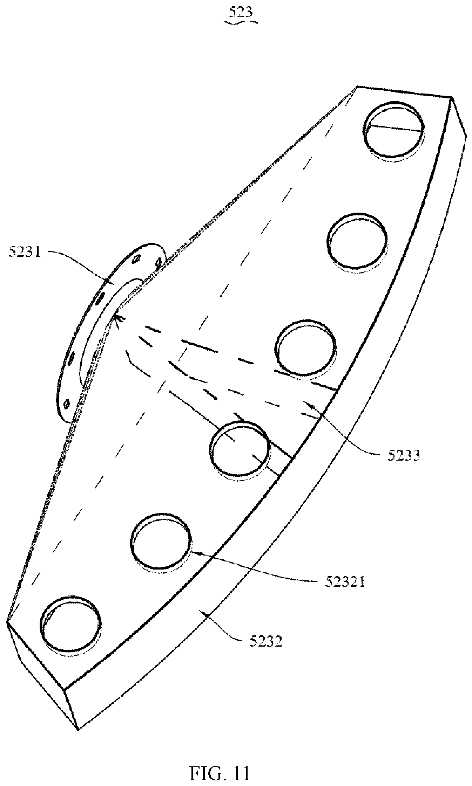

FIG. 11 shows a schematic structural view of the air extraction box 523 provided in this embodiment. As shown in FIG. 11, the air extraction box 523 includes a connection portion 5231 and an air box portion 5232 which communicate with each other. The connection portion 5231 is connected to the air inlet of the fan 521. The air box portion 5232 is provided with ducts 52321 and is in a fan shape, and the air box portions 5232 of the multiple air cooling mechanisms 52 are spliced together in a circle. With such an arrangement, the space under the upper tray body 221 of the carrier tray 22 may be fully utilized. As can be seen, the carrier tray 22 is designed to include the upper tray body 221 with a large diameter and the lower tray body with a small diameter, which not only facilitates the mounting of the preform elevating and rotating mechanism 4 and the heating mechanism 3, but also facilitates the mounting of the main exhaust pipe 51 of the air cooling module 5. In addition, sufficient mounting space may be reserved under the lower tray body 223 to facilitate the arrangement of the heating mechanism 3 and the air cooling mechanism 52.

With continued reference to FIG. 11, the air extraction box 523 further includes an air guide plate 5233. The air guide plate 5233 is mounted within the air box portion 5232 and divides the air box portion 5232 into multiple air extraction spaces which are independently disposed, and multiple ducts 52321 on the air box portion 5232 are divided into multiple duct groups, and the duct groups and the air extraction spaces are disposed in a one-to-one correspondence manner. The air guide plate 5233 may divide the air box portion 5232 of the air extraction box 523 into independent air extraction spaces, so that the air is diverted and the air extraction efficiency of each air extraction space is nearly identical, thereby ensuring that the air cooling effect on the corresponding heating barrel 31 is similar, and avoiding the following problems that the air cooling effect of part of the heating barrels 31 is poor, and thus the preform 100 with a handle in the heating barrel 31 appears the local overheating, while the air cooling effect of part of the heating barrels 31 is good, and the heating efficiency of the preform 100 with a handle within the heating barrel 31 is too low to not satisfy the heating demand, which not only reduces the power consumption but also improves the air cooling efficiency.

Optionally, the air guide plate 5233 is V-shaped, a tip end of the air guide plate 5233 is located at an end facing the connection portion 5231, and an open end of the air guide plate 5233 is located at an end facing away from the connection portion 5231. The V-shaped air guide plate 5233 may isolate an independent region that does not require air extraction, thereby reducing a region of the air box portion 5232 that requires air extraction and ensuring the air extraction effect of the fan 521.

In FIG. 11, the number of air guide plates 5233 is one, and one air guide plate 5233 is disposed in the middle position of the air box portion 5232, so that the air box portion 5232 is divided into two independent air extraction spaces and one space without air extraction. Every three ducts 52321 of the six ducts 52321 is a group of ducts, and each group of ducts 52321 communicates with one air extraction space. Of course, in other embodiments, the number of air guide plates 5233 may also be two, which will not be repeated herein.

The working process of the heating device for heating the preform 100 with a handle provided in this embodiment is as follows.
1) The preform 100 with a handle is conveyed by the preform feeding module 1. When the preform 100 with a handle is conveyed by the preform feeding mechanism 11 and the transition mechanism 12, a direction of the handle 102 of the preform 100 with a handle is in a disordered state. Finally, under the action of the orientation assembly of the orientation mechanism 13, the direction of the handle 102 of the preform 100 with a handle is adjusted to a uniform direction.
2) The carrier mechanism 2 drives the preform elevating and rotating mechanism 4, the heating mechanism 3, and the air cooling module 5 to rotate. During this process, the preform insertion member 422 of the preform elevating and rotating mechanism 4 is inserted into the preform 100 with a handle conveyed by the orientation mechanism 13 under the cooperation of the preform entry section 43131 of the guide rail 431 and the reset member 432. As the carrier tray 22 continues to rotate, the preform insertion member 422 drives the preform 100 with a handle to insert into the heating barrel 31 of the heating mechanism 3 under the cooperation of the barrel entry section 43116 of the guide rail 431 and the reset member 432.
3) The carrier mechanism 2 drives the preform elevating and rotating mechanism 4, the heating mechanism 3 and the air cooling module 5 to continue rotating. During this process, the heating mechanism 3 and the air cooling module 5 are simultaneously activated. The heating barrel 31 of the heating mechanism 3 heats the preform 100 with a handle, and the air cooling module 5 is configured to suck the hot air inside the heating barrel 31 to prevent the local overheating of the preform 100 with a handle inside the heating barrel 31. The rotation drive assembly 45 of the preform elevating and rotating mechanism 4 drives the preform insertion member 422 to drive the preform 100 with a handle to rotate, thereby ensuring the uniform heating of the preform 100 with a handle and avoiding the local overheating.
4) The carrier mechanism 2 drives the preform elevating and rotating mechanism 4, the heating mechanism 3 and the air cooling module 5 to continue rotating. During this process, when the preform 100 with a handle is heated to a state suitable for bottle-blowing, the preform insertion member 422 of the preform elevating and rotating mechanism 4 drives the preform 100 with a handle to disengage from the heating barrel 31 under the cooperation of the barrel detachment section 43112 of the guide rail 431, and the preform picking manipulator 6 clamps the preform 100 with a handle. As the carrier tray 22 continues to rotate, the preform insertion member 422 is disengaged from the preform 100 with a handle under the action of the preform detachment section 43121 of the guide rail 431. The preform picking manipulator 6 transfers the preform 100 with a handle into the bottle-blowing machine for bottle-blowing.

## Claims

1. A bottle preform heating device, comprising:
a preform feeding module (1);
a carrier mechanism (2), comprising a rack (21), a carrier tray (22) and a carrier tray drive assembly (23), wherein the carrier tray (22) is rotatably mounted on the rack (21), and the carrier tray drive assembly (23) is configured to drive the carrier tray (22) to rotate relative to the rack (21);
a plurality of heating mechanisms (3), disposed at intervals in a circumferential direction of the carrier tray (22), wherein each of the plurality of heating mechanisms (3) comprises a heating barrel (31);
a plurality of preform elevating and rotating mechanisms (4), disposed at intervals in the circumferential direction of the carrier tray (22) and being in one-to-one correspondence with the plurality of heating mechanisms (3), wherein each of the plurality of preform elevating and rotating mechanisms (4) is configured to receive a bottle preform conveyed by the preform feeding module (1) and insert the bottle preform into the heating barrel (31); and
an air cooling module (5), configured to extract air from the heating barrel (31).

2. The bottle preform heating device of claim 1, wherein each of the plurality of preform elevating and rotating mechanisms (4) comprises:
a bracket (41), fixed on the carrier tray (22);
a preform insertion assembly (42), comprising an elevating base (421) and a preform insertion member (422), wherein the elevating base (421) is slidably mounted on the bracket (41), and the preform insertion member (422) is mounted on the elevating base (421) and is located above the heating barrel (31); and
an elevating drive assembly (43), configured to drive the elevating base (421) to move up and down relative to the bracket (41), to enable the preform insertion member (422) to insert into the bottle preform on the preform feeding module (1) and enable the bottle preform to insert into the heating barrel (31).

3. The bottle preform heating device of claim 2, wherein the elevating drive assembly (43) comprises a guide rail (431) and a reset member (432), the reset member (432) is mounted on the bracket (41), an output end of the reset member (432) is connected to the elevating base (421), the reset member (432) is configured to drive the elevating base (421) to move downward, and the elevating base (421) is capable of moving up along the guide rail (431) and is capable of being driven by the reset member (432) to move down along the guide rail (431).

4. The bottle preform heating device of claim 3, wherein the guide rail (431) comprises a barrel detachment section (43112), a preform detachment section (43121), a preform entry section (43131) and a barrel entry section (43116) which are disposed at intervals in a rotation direction of the carrier tray (22) in sequence, each of the barrel detachment section (43112) and the preform detachment section (43121) is an arc-shaped section that extends up in the rotation direction of the carrier tray (22), each of the preform entry section (43131) and the barrel entry section (43116) is an arc-shaped section that extends down in the rotation direction of the carrier tray (22), and the elevating base (421) is capable of moving up and down along the guide rail (431).

5. The bottle preform heating device of claim 4, wherein the guide rail (431) comprises a body portion (4311), two ends of the body portion (4311) are fixed on the rack (21), and the barrel detachment section (43112) and the barrel entry section (43116) are disposed on the body portion (4311); and
the guide rail (431) further comprises a first adjustment portion (4312), the preform detachment section (43121) is disposed on the first adjustment portion (4312), and a position at which the first adjustment portion (4312) is mounted on the body portion (4311) is adjustable.

6. The bottle preform heating device of claim 4 or 5, wherein the guide rail (431) further comprises a second adjustment portion (4313), the preform entry section (43131) is disposed on the second adjustment portion (4313), and a position at which the second adjustment portion (4313) is mounted on the body portion (4311) is adjustable.

7. The bottle preform heating device of claim 2, wherein each of the plurality of preform elevating and rotating mechanisms (4) further comprises a rotation drive assembly (45), the preform insertion member (422) is rotatably mounted on the elevating base (421), and the rotation drive assembly (45) is configured to drive the preform insertion member (422) to rotate; and
the rotation drive assembly (45) comprises a rotation driver (451), an input gear (452), an output gear (453) and a slide sleeve (454), the rotation driver (451) is mounted on the bracket (41), the rotation driver (451) is configured to drive the input gear (452) to rotate, the output gear (453) meshes with the input gear ( 452), the slide sleeve (454) is drivingly connected to the output gear (453), and the preform insertion member (422) is configured to slidably pass through the slide sleeve (454) and is rotatable along with the rotation of the slide sleeve (454).

8. The bottle preform heating device of any one of claims 1 to 7, wherein the bottle preform is a preform with a handle, the preform feeding module (1) comprises a preform feeding mechanism (11), a transition mechanism (12) and an orientation mechanism (13), the preform feeding mechanism (11) is configured to receive the bottle preform on a conveyor line and convey the bottle preform to the transition mechanism (12), the transition mechanism (12) is configured to convey the bottle preform to the orientation mechanism (13), and the orientation mechanism (13) is configured to adjust the handle (102) of the bottle preform and convey the bottle preform to a position where a preform elevating and rotating mechanism of the plurality of preform elevating and rotating mechanisms (4) is located.

9. The bottle preform heating device of any one of claims 1 to 7, wherein the air cooling module (5) comprises a main exhaust pipe (51) and a plurality of air cooling mechanisms (52), the main exhaust pipe (51) is mounted on the carrier tray (22) and perpendicular to the carrier tray (22), and the plurality of the air cooling mechanisms (52) are disposed at intervals in the circumferential direction of the carrier tray (22) and communicate with the main exhaust pipe (51).

10. The bottle preform heating device of claim 9, wherein each of the plurality of air cooling mechanisms (52) comprises a fan (521), an exhaust duct (522) and an air extraction box (523), the exhaust duct (522) is connected to an air outlet of the fan (521), the air extraction box (523) is connected to an air inlet of the fan (521), and a duct (52321) is disposed on the air extraction box (523) and communicates with the bottom of the heating barrel (31).

11. The bottle preform heating device of claim 10, wherein the air extraction box (523) comprises a connection portion (5231) and an air box portion (5232) which communicate with each other, the connection portion (5231) is connected to the air inlet of the fan (521), and the air box portion (5232) is provided with a plurality of ducts (52321).
